# EUROPEAN PATENT SPECIFICATION

(11) **EP 1 175 067 B1**
(45) Date of publication and mention of the grant of the patent: **15.06.2005**
(21) Application number: 01660144.5
(22) Date of filing: 20.07.2001
(51) Int. Cl.: H04L 29/06

(54) **Method and arrangement for managing data transmission in a data network**
Vorrichtung und Verfahren zur Verwaltung von Datentransmission in einem Datennetzwerk
Méthode et arrangement pour la gestion de transmission de données dans un réseau de données

(30) Priority: 21.07.2000 FI 20001700
(43) Date of publication of application: 23.01.2002
(73) Proprietor: Suomen Posti Oy, 00100 Helsinki (FI)
(72) Inventor: Gefwert, Boris, 02360 Espoo (FI)
(74) Representative: Kupiainen, Juhani Kalervo

(56) References cited:
- WO-A-01/46773
- US-A- 6 067 623
- LIPPERTS S ET AL: "An agent-based middleware - a solution for terminal and user mobility" COMPUTER NETWORKS, ELSEVIER SCIENCE PUBLISHERS B.V., AMSTERDAM, NL, vol. 31, no. 19, 31 August 1999 (1999-08-31), pages 2053-2062, XP004304615 ISSN: 1389-1286

## Description

The invention relates to a method and arrangement for managing data transmission in a data network. In particular, the invention relates to the transmission of confidential data in a data network.

The use of data networks and in particular the use of the Internet data network has increased rapidly. In data networks, information and services are being produced, distributed, sold and consumed in various different forms. Among these services, let us point out for instance different data network magazines and newspapers that are produced and consumed in a network environment. Respectively, various documents, both public and secret documents as well as personal documents are handled in a data network. Consequently, although the Internet, for example, is a public data network , it includes several servers where the access to the files is allowed for a limited group of users only.

A data network is a medium whereby information is transmitted from a source to one or several targets as electric (or optical) signals, preferably in digital form, as successively transmitted units, i.e. data packets. Packet-switched networks, as well as the structure of the packets and frames used therein, are standardized. A packet consists of a number of fields, where in digital form, in bits, there is represented various data that is relevant with respect to establishing and maintaining a connection, such as the address data of the receiver (target) and the transmitter (source), in addition to the information proper that is meant for the receiver. When a data packet is processed at the network nodes and in the final destination, it is checked whether the data packet is error-free and the receiver is the correct one, a possible acknowledgement is sent for the transmitter, and in an error situation, a retransmission of the packet is requested. The evaluation of the data packet is performed on the basis of the data contained in the various fields thereof.

The Internet is a public data network, through which information is transmitted in a packet form, in a way determined for the TCP/IP (Transmission Control Protocol / Internet Protocol) protocol family. The problem with Internet is the transmission of data and services that are confidential and/or subject to payment, because without special measures, anybody can have access to the databases connected to the network.

There are known measures for improving the information security in the Internet and respective public networks. For encrypting a connection from the transmitter to the receiver, there are available encrypting programs, whereby the data packets to be transmitted are encrypted in a certain way, and respectively the encryption of the received data packets is decoded. The most general encryption methods are methods based on a so-called public encryption key. With single connections, this is a fairly functional arrangement, but when the number of receivers and transmitters as well as the number and speed of the connections increases, problems arise. Unauthorized access to a computer connected to a network, or to a certain data source or service, is prevented by means of and identifier, password or the like.

A number of drawbacks is, however, connected to the prior art arrangements. If the user uses for instance in the Internet several services where a registration is required, he must memorize several different encryption keys and user passwords. Because these passwords are difficult to memorize by heart, people often write a list of the different passwords. Said list is cumbersome to carry along, and what is more, it may fall in the hands of unauthorized parties. The passwords may fall into unauthorized use also so that the data traffic is being spied on, or that the user deliberately gives his user passwords for a commercial service to his friends and relatives, in which case the service provider is left without payment for some of the used services.

Problems connected to the unauthorized use of said passwords have been attempted to be corrected so that the passwords are changed at regular intervals, or always after using the service. In this case, however, the user needs an even larger number of passwords, which makes it cumbersome to use the service.

Another drawback of the prior art arrangements is that in case an official announcement, for example, should be given to the user in the network environment, it would not be clear where said notice should be sent and by what means, and what would be the responsibilities of the parties participating in the transaction in order to make sure that the message reaches its destination. Said announcements could be for instance a notice of the right to vote, a summons to the court, etc.

US 6 067 623 A discloses a system and a method for controlling client access to enterprise resources through a middle tier server. Enterprise resource authorizations are maintained in a middle tier server. Users authenticate with the server causing it to map and transform the client access authorization into enterprise resource credentials. Enterprise resources are accessed after authorizing using the transformed credentials.

The object of the invention is to provide a solution for managing data transmission, by means of which solution said problems and drawbacks connected to the prior art can be alleviated. The purpose of the present invention is to solve how such information/service of the data network that is meant for a limited target or group of targets is addressed to its destination, and how the access rights required for its usage are assigned. In addition, the purpose is to solve how the information addresses and user rights required in the network are produced, distributed, stored, transmitted and used.

One of the basic ideas of the invention is that when the information meant for the user is stored, the address of the storage location is transmitted to the user by intermediation of a reliable party (intermediator). Thus, on the basis of user verification carried out by the intermediator, the user can access the information/services of several different service and information producers.

The method according to the invention for managing data transmission in a data network is characterized in that said method comprises the following steps, where
- a determined piece of information is stored in a storage location according to a determined address,
- the address information that determines said address is transmitted to the intermediator,
- information of at least one user who has the right to access said determined piece of information is transmitted to the intermediator,
- said address information is stored in the user-specific directory of the intermediator, in which directory said at least one user has access, and
- said piece of information is transmitted to the user on the basis of said address information.

The arrangement according to the invention for managing data transmission in a data network is characterized in that said arrangement comprises
- means for storing a determined piece of information in a storage location according to a determined address,
- means for transmitting said address information to an intermediator, said address information defining said address,
- means for transmitting to the intermediator information of at least one user who has right to access said determined piece of information,
- means for storing said address information in the user-specific directory of the intermediator, in which directory said at least one user has access, and
- means for transmitting said determined piece of information to the user on the basis of said address information.

Some of the preferred embodiments of the invention are set forth in the independent claims.

By means of the invention, remarkable advantages are achieved as compared to the arrangements of the prior art. The user may use several data network services, but he still needs only one verification procedure in order to establish a contact with the intermediator's file. Moreover, by means of the invention, the producers of data/services do not need to perform any verification/encryption procedures with individual users, because all data transmission can be carried out by intermediation of a reliable connection between the intermediator and the service producer, and the intermediator is responsible for verifying each user and for encrypting the data. In addition, the producer can use the user identifiers from its own client register without having to create new identifiers for the purposes of the data transmission procedure.

Moreover, by means of the invention, a reliable check bit of the reception of the transmitted information can be created, because the data transmission is carried out by a reliable external intermediator. Thus the data network can also be used for transmitting such official information, for example information sent by the authorities, where the transmitter needs an acknowledgement that the information has reached the destination.

In the present patent application, the following concepts, among others, are used:
- Producer' is a party, such as a person, company, public administrator or authority who offers target-specific information or service in a network.
- 'Consumer' is a client, person, company, public administrator or authority who uses the assigned target-specific information or service.
- Intermediator' is a third reliable party who connects the location of said information or service and respective access rights in a reliable and uncontradicted way.
- 'Service' or 'determined piece of information' is information contained in a data network, and it can be for instance a document, bank statement, publication or other service that is available in the data network and provided by the producer.
- 'Address' determines in which computer/file of the network the information or service in question is located.
- 'Right' is an identifier produced by the producer, on the basis of which identifier the producer verifies that the user has access rights to the service.
- 'Access rights' consist of the user identifier, service address and rights.
- 'Signature' is a technology for verifying the transmitter of the message.
- 'Encryption' is a procedure for encrypting a message transmitted in a data network for instance by applying the public key method.
- 'Intermediary directory' is a storage location maintained by the intermediator for user-specific addresses and access rights, which directory is available for the user in question.
- 'Set of boxes' is an intermediary directory that is available for the user on the basis of a (light) verification of said user.
- 'Strongbox' is an intermediary directory that is available for the user on the basis of a strong verification of said user.

As a first example, let us observe how a document of a delicate nature is sent to the user. The producer of said document encrypts the document address by the user's public key. Now only the user can find out where the document is located. In addition, the producer encrypts the user identifier by the intermediator's public key. Now only the intermediator can find out to which user the encrypted address is meant for. The producer transmits the created access rights message to the intermediator. In this way, both the user and the address are encrypted from outsiders. The intermediator opens the message by its own identifier and identifies the user on the basis of the message. Thereafter the intermediator places a link in the user's intermediary directory, for example in the strongbox. The intermediator cannot open the encrypted address.

The user opens the strongbox by his own identifier and fetches the document for further use by means of the link that was stored in the strongbox. Thus the producer does not need to separately transmit the document. When necessary, in the link there also is determined the encryption mechanism for transmitting the contents of the document itself.

Let us assume that the document to be transmitted is an official announcement assigned for a certain user, said announcement being for example a summons to a lower court of justice or a notice of the right to vote. Even in this case the procedure proceeds according to the description above. In addition, the intermediator can inform the authority in question (the producer) that the message is received, that it is placed in the strongbox to be available for the consumer, that the consumer has visited the strongbox or that the consumer has used his access rights etc.

Let us next observe the transmission of for instance such services that are subject to payment. A content producer (producer), when publishing for example a new issue of a network magazine, creates for the subscribers (users) issue-specific access rights and sends an access rights message to the intermediator. The intermediator places the address information contained in the access rights message in the user's intermediary directory, for example in a set of boxes. The user opens the set of boxes and finds out that a new issue has been published; then he can take it into use by means of the address information.

A merchant and a producer of logistic services can send a transmission-specific identifier (access rights message) to the intermediator, who places it in the customer's (user's) intermediary directory, for example in the set of boxes, and informs the customer accordingly in a purchase situation. The customer need not memorize separate identifiers, but he can activate the transmission status from his own box.

A party (producer) who assigns regular customer rights can write the access rights in the user's customer statement and send an access rights message to the intermediator, who places it in the user's intermediary directory, for example in a set of boxes. Now the user may follow all regular customer information without enterprise-specific identifiers and passwords.

The user may also transfer for example a right based on possession to another user by sending an access rights message to the intermediator, who places the access rights in the new user's intermediary directory, such as in the set of boxes.

In general, a right can be for instance personal, company-specific or based on possession, or it can be bound to time, to a number of transactions or to a value determined in terms of money.

The invention is explained in more detail below, with reference to the appended drawings, where
- figure 1: is a flow diagram illustrating a method according to the invention for defining access rights,
- figure 2: is a flow diagram illustrating a method according to the invention for transmitting access rights,
- figure 3: is a flow diagram illustrating a method according to the invention for using access rights,
- figure 4: is a block diagram illustrating an arrangement according to the invention for data transmission, and
- figure 5: illustrates a user-specific intermediary directory according to the invention, where the address information is represented as links.

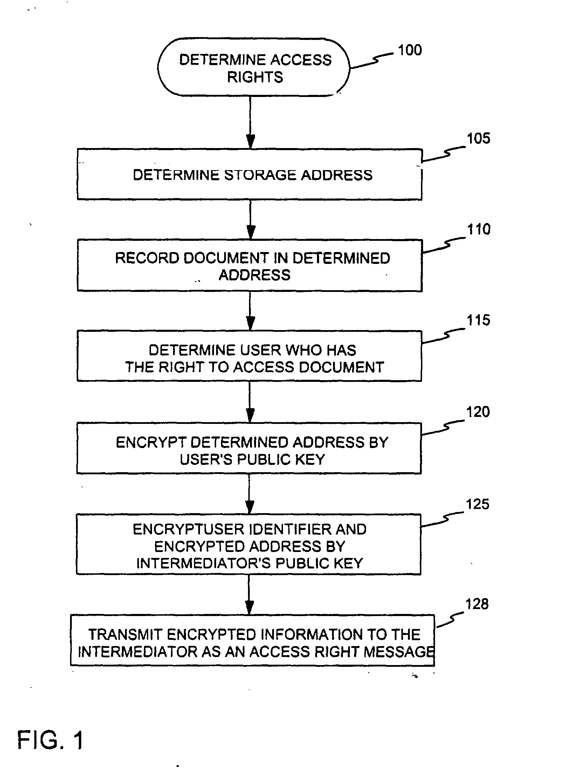

Figure 1 is a flow diagram illustrating a method according to the invention for defining, 100, access rights. In this example, let us observe how the access rights of a document are determined. When a producer has created a document, it determines, 105, the storage address where said document can be found. The storage address can be user-specific, or it can be common for several users. The document is recorded so that it can be looked up in the data network by means of the determined address, 110.

Thereafter there is determined one or more users who have the right to access said document, 115. The determined address and the name of the document are determined as the address link and are encrypted by the public key of said user, 120, so that the encryption can only be decoded by the user in question. Thereafter there is written an access rights message, so that the user identifier and the encrypted, determined address are further encrypted by the intermediator's public key, 125, in which case only the intermediator can find out the user identifier from the access rights message. Finally the written access rights message is transmitted from the producer to the intermediator, 128. If several users have access rights to said document, the producer writes for each user a corresponding access rights message and sends the messages to the intermediator.

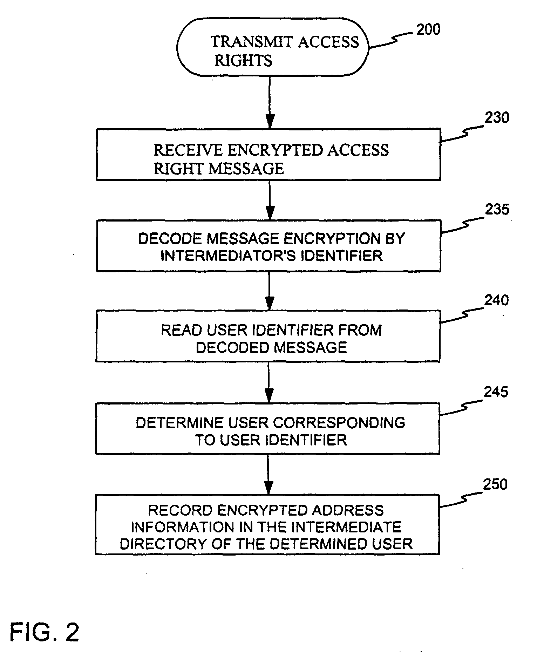

Figure 2 is a flow diagram illustrating a method according to the invention for transmitting access rights, 200. When the intermediator has received the encrypted access rights message, 230, it decodes the first encryption of the access rights message by the identifier of the intermediator, 235. Thereafter the intermediator can read the user identifier from the decoded message, 240. The intermediator has a list of the user identifiers used by the producer and of corresponding users. On the basis of said list, the intermediator determines the user corresponding to the user identifier contained in the received message, 245. After the user is determined, the encrypted address information contained in the access rights message is recorded as an address link in the user's intermediary directory, 250. All received access rights messages are proceeded in the same way.

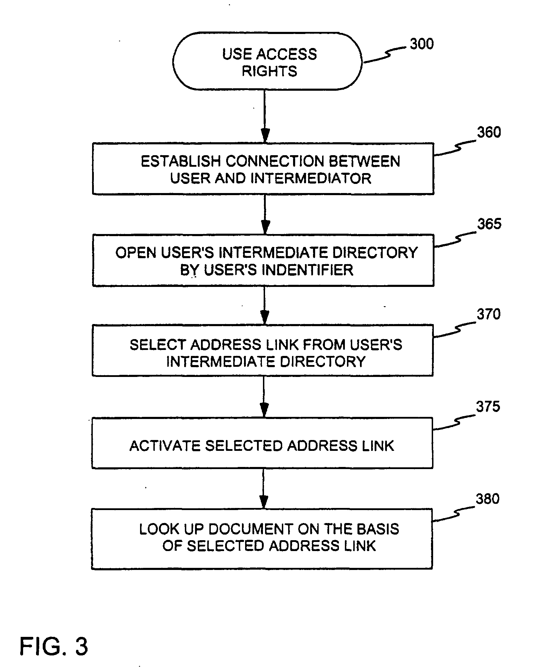

Figure 3 is a flow diagram illustrating a method according to the invention for using the access rights, 300. When a user wishes to check the received access rights, he contacts the intermediator through the data network, 360. The user can open his personal intermediary directory by his own identifier, 365, by which identifier the encryption of the address links contained in the intermediary directory is decoded. Now names of the address links recorded in the intermediary directory can be read by the user. Thereafter the user selects the address link of the document (or other service) that he wishes to fetch for use, 370. The user activates the selected address link, 375, whereafter the system looks the selected document up in the data network on the basis of the address contained by said link for the use of the user, 380.

In order to enable the user to read his intermediary directory, the intermediator can require that the user passes a verification procedure. Said verification procedure can be all the more demanding, the higher the level of desired confidentiality. The user may also have several intermediary directories, in which case the access to the various intermediary directories requires a verification procedure of varying strength. The strength required of the verification process can be indicated in the access rights message together with the user identifier, in which case the intermediator records the access rights in such an intermediary directory of the user to which the access requires a sufficiently strong user verification.

If in connection with a confidential document it is wished to ensure that the user has received/used the document, this can be carried out for example in the following way. When the user sends to the intermediary directory a request that said document should be opened, the intermediator registers the request. Now also the document itself is transmitted to the user by the intermediator, so that the intermediator can also register the fact that the user has received said document. This type of document advantageously contains and identifier connected to the decoding of the encryption, which identifier is transmitted by the intermediator to the producer, which further registers the transaction. The producer transmits the encryption decoding key according to the identifier to the intermediator, who in turn transmits said key to the user. Thus it can be ensured that the user has received the document and wished to decode its encryption. In case for instance the data transmission connection should be interrupted, so that the user does not receive the encryption decoding key, the key can be requested again. In the user's terminal, there is advantageously arranged a program that can be loaded from the intermediator's server, for example in connection with the first request, and which program automatically sends the intermediator an acknowledgement to the effect that the encryption decoding key has been received.

In connection with network services, it may be necessary to prevent parallel usage of one and the same user link by several different users. This can be prevented for example so that the real link to the producer service is in the possession of the intermediator. Thus the first implementation of the service is always carried out through the intermediator's server, in which case there are verified both the user and the terminal from which the request is received. The request is transmitted to the producer completed with additional information, such as the identifier of the user and the terminal, possible time stamp etc. This enables the verification of an authorized user and the assignment of a so-called temporary certificate. Said information is encrypted by a pair of keys, which are known by the intermediator and the producer, and transmitted to the producer. An alternative solution would be that all service requests between the user and the producer were transmitted through the intermediator, in which case the existence of access rights could always be verified.

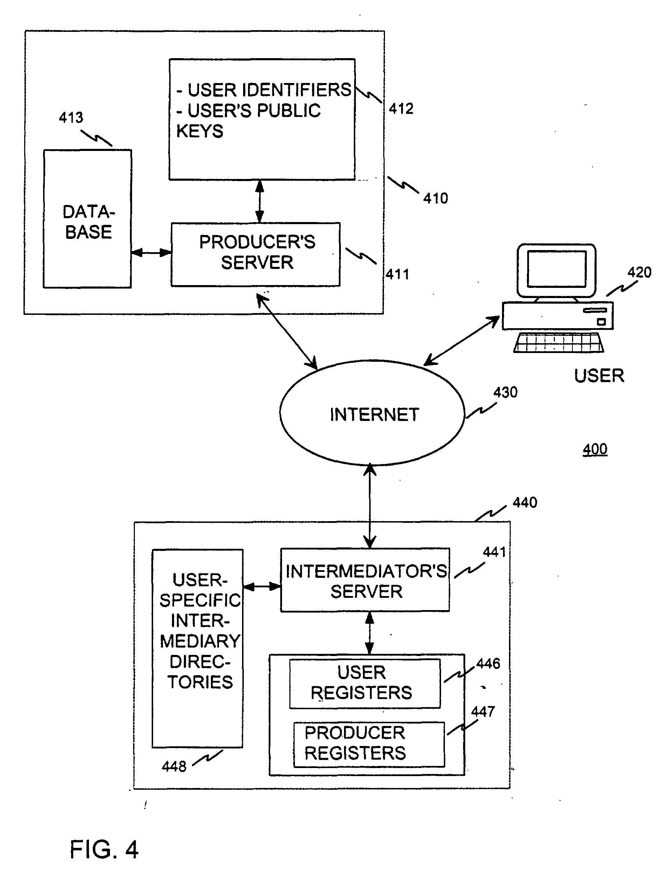

Figure 4 is a block diagram illustration an arrangement according to the invention for transmitting information. Said arrangement comprises the following elements connected to an Internet data network 430: a producer equipment 410, a user equipment 420 and an intermediator equipment 440. The producer equipment 410 comprises the producer's server 411, which is connected to the Internet data network. The producer's server is provided with a database 413, in which there are stored the documents, the data services etc. available for the user. In addition, the producer's equipment includes a register 412 comprising the information of the producer's clients/users. Said user information includes the client identifiers used by the producer, i.e. the user identifiers and the public keys of the users. On the basis of said information, the producer's server writes the access right messages transmitted to the intermediator.

The intermediator's equipment 440 includes the intermediator's server 441, which is connected to the Internet data network. The intermediator's server includes the database 448, in which the user-specific intermediary directories are recorded. In addition, the intermediator's server includes the user registers 446, which contain the necessary information of the users and of the user verification procedures, whereby the user is verified in order to grant access to one or several user-specific intermediary directories. Moreover, the intermediator's servers includes producer registers, which contain information of possible data transmission encryption procedures used with various producers, as well as lists of the user identifiers used by the producers and of their respective identification with the users included in the intermediator's register.

The user's terminal 420 can be an ordinary computer connected to the Internet data network for instance by means of a modem, provided with the necessary browser programs and possible data transmission encryption programs.

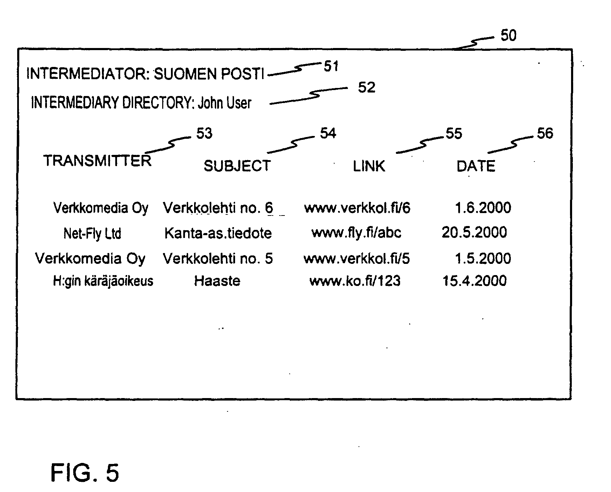

Figure 5 illustrates an intermediary directory maintained by an intermediator, seen as it opens in the user's terminal, 50. In the intermediary directory, there is represented the intermediator's name 51 and the user's name 52. Information of received link addresses is represented as rows in the same fashion as in known email directories. As regards the received links, there are represented, in respective columns, the transmitter, the subject, the link and the date of the transmission. The opening of a received file is carried out by activating the desired link. The link address as such does not have to be represented in the user's directory, but the file can be opened for example by activating the 'subject' of the desired link, in which case the file is looked up on the basis of the recorded link address.

In the specification above, only a few of the embodiments according to the invention have been described. Naturally the principle according to the invention can be modified within the scope determined in the appended claims, as regards the details and ranges of usage of the specific embodiment.

## Claims

1. A method for managing data transmission in a data network, **characterized in that** said method comprises the following steps, where
- a determined piece of information is stored in a storage location according to a determined address (105, 110)
- the address information that determines said address is transmitted to the intermediator (128),
- information of at least one user who has the right to access said determined piece of information is transmitted to the intermediator (115),
- said address information is stored in the user-specific directory of the intermediator, in which directory said at least one user has access (250), and
- said determined piece of information is transmitted to the user on the basis of said address information (380).

2. A method according to claim 1, **characterized in that** said address information is encrypted by the user's public key, in which case the address information encryption can be decoded by the user (120, 365).

3. A method according to claim 1, **characterized in that** said user information is encrypted by the intermediator's public key (125), in which case the intermediator decodes the user information encryption and records the address information in a user-specific intermediary directory on the basis of said user information (235-250).

4. A method according to claim 1, **characterized in that** in between the user and the first intermediary directory, there is established a connection on the basis of user verification.

5. A method according to claim 4, **characterized in that** for one user, there are created two intermediary directories, in which case between the user and the first intermediary directory, there is established a connection on the basis of a first verification of the user, and in between the user and the second intermediary directory, there is created a connection on the basis of a second verification of the user, in which case the first and second verification are mutually different as regards the reliability of said verification procedure.

6. A method according to claim 1, **characterized in that** the intermediator transmits a given information to the user.

7. A method according to claim 6, **characterized in that**
- the user sends the intermediator a request for receiving a given piece of information,
- an encryption decoding key for decoding the encryption of said given piece of information is transmitted to the user,
- the transmission of said encryption decoding key to the user is registered as an indication of the reception of said document.

8. An arrangement for managing data transmission in a data network, **characterized in that** said arrangement comprises
- means for storing a determined piece of information in a storage location according to a determined address (411, 413)
- means for transmitting said address information to an intermediator, said address information defining said address (411, 430, 441),
- means for transmitting to the intermediator information of at least one user who has right to access said determined piece of information (411, 412, 430, 44),
- means for storing said address information in the user-specific directory of the intermediator, in which directory said at least one user has access (441, 448), and
- means for transmitting said determined piece of information to the user on the basis of said address information (413, 411, 430, 420).

9. An arrangement according to claim 8, **characterized in that** said arrangement also comprises means for encrypting said address information by the user's public key, so that the address information encryption can be decoded by the user (411, 412).

10. An arrangement according to claim 8, **characterized in that** said arrangement also comprises means for encrypting said user information by the intermediator's public key prior to the transmission to the intermediator, means for decoding the encryption of the user information after transmission to the intermediator and means for recording the address information in a user-specific intermediary directory on the basis of said user information (411).

11. An arrangement according to claim 8, **characterized in that** said arrangement comprises means for verifying the user in order to establish a connection between the user and the intermediator (441, 446).

12. An arrangement according to claim 11, **characterized in that** said arrangement comprises means for creating two intermediary directories for one user, means for establishing a connection between the user and the first intermediary directory on the basis of a first verification of the user, and means for establishing a connection between the user and the second intermediary directory on the basis of a second verification of the user, in which case the first and second verification are mutually different as regards the reliability of the verification procedure.

## Patentansprüche

1. Ein Verfahren zum Verwalten der Datenübertragung in einem Datennetzwerk, **dadurch gekennzeichnet, dass** das Verfahren folgende Schritte umfasst, wobei
- ein bestimmtes Informationsstück an einem Speicherort entsprechend einer bestimmten Adresse (105, 110) gespeichert wird,
- die Adressinformation, die die Adresse bestimmt, an den Vermittler (128) übertragen wird,
- die Information mindestens eines Benutzers, der das Zugriffsrecht auf das bestimmte Informationsstück besitzt, an den Vermittler (115) übertragen wird,
- die Adressinformation in einem benutzerspezifischen Verzeichnis des Vermittlers gespeichert wird, in dem der mindestens eine Benutzer zugriff (250) besitzt, und
- das bestimmte Informationsstück aufgrund der Adressinformation (380) an den Benutzer übertragen wird.

2. Ein Verfahren nach Anspruch 1, **dadurch gekennzeichnet, dass** die Adressinformation mit dem öffentlichen Schlüssel des Benutzers verschlüsselt wird, in welchem Fall die Verschlüsselung der Adressinformation vom Benutzer (120, 365) dekodiert werden kann.

3. Ein Verfahren nach Anspruch 1, **dadurch gekennzeichnet, dass** die Benutzerinformation mit dem öffentlichen Schlüssel (125) des Vermittlers verschlüsselt wird, in welchem Fall der Vermittler die Verschlüsselung der Benutzerinformation dekodiert und die Adressinformation in einem benutzerspezifischen Vermittlerverzeichnis aufgrund der Benutzerinformation (235-250) aufzeichnet.

4. Ein Verfahren nach Anspruch 1, **dadurch gekennzeichnet, dass** zwischen dem Benutzer und dem ersten Vermittlerverzeichnis eine Verbindung aufgrund der Benutzerverifizierung hergestellt wird.

5. Ein Verfahren nach Anspruch 4, **dadurch gekennzeichnet, dass** zwei Vermittlerverzeichnisse für einen Benutzer erstellt werden, in welchem Fall zwischen dem Benutzer und dem ersten Vermittlerverzeichnis eine Verbindung aufgrund einer ersten Verifizierung des Benutzers und zwischen dem Benutzer und dem zweiten Vermittlerverzeichnis eine Verbindung aufgrund einer zweiten Verifizierung des Benutzers erstellt wird, in welchem Fall die erste und die zweite Verifizierung hinsichtlich der Zuverlässigkeit des Verifizierungsverfahrens voneinander verschieden sind.

6. Ein Verfahren nach Anspruch 1, **dadurch gekennzeichnet, dass** der Vermittler eine gegebene Information an den Benutzer überträgt.

7. Ein Verfahren nach Anspruch 6, **dadurch gekennzeichnet, dass**
- der Benutzer an den Vermittler eine Aufforderung zum Empfang des gegebenen Informationsstücks sendet,
- der Verschlüsselungsdekodierschlüssel zum Dekodieren der Verschlüsselung des gegebenen Informationsstücks an den Benutzer übertragen wird,
- die Übertragung des Verschlüsselungsdekodierschlüssels an den Benutzer als Anzeichen für den Empfang des Dokuments registriert wird.

8. Eine Vorrichtung zum Verwalten der Datenübertragung in einem Datennetzwerk, **dadurch gekennzeichnet, dass** die Vorrichtung umfasst:
- Mittel zum Speichern des bestimmten Informationsstücks an einem Speicherort entsprechend einer bestimmten Adresse (411, 413),
- Mittel zum Übertragen der Adressinformation an einen Vermittler, welche Adressinformation die Adresse (411, 430, 441) definiert,
- Mittel zum Übertragen der Vermittlerinformation mindestens eines Benutzers, der das Zugriffsrecht auf das bestimmte Informationsstück (411, 412, 430, 44) besitzt,
- Mittel zum Speichern der Adressinformation im benutzerspezifischen Verzeichnis des Vermittlers, in welchem Verzeichnis der mindestens eine Benutzer Zugriff hat (441, 448), und
- Mittel zum Übertragen des bestimmten Informationsstücks an den Benutzer aufgrund der Adressinformation (413, 411, 430, 420).

9. Eine Vorrichtung nach Anspruch 8, **dadurch gekennzeichnet, dass** die Vorrichtung ferner Mittel zum Verschlüsseln der Adressinformation mit den öffentlichen Schlüssel des Benutzers umfasst, damit die Adressinformationsverschlüsselung vom Benutzer (411, 412) dekodiert werden kann.

10. Eine Vorrichtung nach Anspruch 8, **dadurch gekennzeichnet, dass** die Vorrichtung ferner Mittel zum Verschlüsseln der Benutzerinformation mit dem öffentlichen Schlüssel des Vermittlers vor der Übertragung an den Vermittler, Mittel zum Dekodieren der Verschlüsselung der Benutzerinformation nach der Übertragung an den Vermittler und Mittel zum Aufzeichnen der Adressinformation in einem benutzerspezifischen Vermittlerverzeichnis aufgrund der Benutzerinformation (411) umfasst.

11. Eine Vorrichtung nach Anspruch 8, **dadurch gekennzeichnet, dass** die Vorrichtung Mittel zum Verifizieren des Benutzers umfasst, um eine Verbindung zwischen dem Benutzer und dem Vermittler (441, 446) herzustellen.

12. Eine Vorrichtung nach Anspruch 11, **dadurch gekennzeichnet, dass** die Vorrichtung Mittel zum Erstellen von zwei Vermittlerverzeichnissen für einen Benutzer, Mittel zum Herstellen einer Verbindung zwischen dem Benutzer und dem ersten Vermittlerverzeichnis aufgrund einer ersten Verifizierung des Benutzers und Mittel zum Herstellen einer Verbindung zwischen dem Benutzer und dem zweiten Vermittlerverzeichnis aufgrund einer zweiten Verifizierung des Benutzers umfasst, in welchem Fall die ersten und zweite Verifizierung hinsichtlich der Zuverlässigkeit des Verifizierungsverfahrens voneinander verschiedenen sind.

## Revendications

1. Procédé de gestion de transmission de données dans un réseau de données, **caractérisé en ce que** ledit procédé comprend les étapes suivantes, dans lesquelles
- une information déterminée est stockée dans un emplacement de stockage selon une adresse déterminée (105, 110),
- les informations d'adresse qui déterminent ladite adresse sont transmises à l'intermédiaire (128),
- les informations d'au moins un utilisateur qui possède le droit d'accès à ladite information déterminée sont transmises à l'intermédiaire (115),
- lesdites informations d'adresse sont stockées dans le répertoire spécifique à l'utilisateur de l'intermédiaire, auquel répertoire ledit au moins un utilisateur a accès (250), et
- ladite information déterminée est transmise à l'utilisateur en fonction desdites informations d'adresse (380).

2. Procédé selon la revendication 1, **caractérisé en ce que** lesdites informations d'adresse sont chiffrées par la clé publique de l'utilisateur, auquel cas le chiffrement des informations d'adresse peut être décodé par l'utilisateur (120, 365).

3. Procédé selon la revendication 1, **caractérisé en ce que** lesdites informations de l'utilisateur sont chiffrées par la clé publique de l'intermédiaire (125), auquel cas l'intermédiaire décode le chiffrement des informations de l'utilisateur et enregistre les informations d'adresse dans un répertoire intermédiaire spécifique à l'utilisateur en fonction desdites informations de l'utilisateur (235-250).

4. Procédé selon la revendication 1, **caractérisé en ce qu'**entre l'utilisateur et le premier répertoire intermédiaire, il est établi une connexion en fonction de la vérification de l'utilisateur.

5. Procédé selon la revendication 4, **caractérisé en ce que** pour un utilisateur, il est créé deux répertoires intermédiaires, auquel cas entre l'utilisateur et le premier répertoire intermédiaire, il est établi une connexion en fonction d'une première vérification de l'utilisateur, et entre l'utilisateur et le deuxième répertoire intermédiaire, il est créé une connexion en fonction d'une deuxième vérification de l'utilisateur, auquel cas la première et la deuxième vérification sont différentes mutuellement en ce qui concerne la fiabilité de ladite procédure de vérification.

6. Procédé selon la revendication 1, **caractérisé en ce que** l'intermédiaire transmet des informations données à l'utilisateur.

7. Procédé selon la revendication 6, **caractérisé en ce que**
- l'utilisateur envoie une demande de réception d'une information donnée à l'intermédiaire,
- une clé de décodage de chiffrement pour le décodage du chiffrement de ladite information donnée est transmise à l'utilisateur,
- la transmission de ladite clé de décodage de chiffrement à l'utilisateur est enregistrée comme indication de la réception dudit document.

8. Agencement de gestion de transmission de données dans un réseau de données, **caractérisé en ce que** ledit agencement comprend
- des moyens de stockage d'une information déterminée dans un emplacement de stockage selon une adresse déterminée (411, 413),
- des moyens de transmission desdites informations d'adresse à un intermédiaire, lesdites informations d'adresse définissant ladite adresse (411, 430, 441),
- des moyens de transmission à l'intermédiaire d'informations d'au moins un utilisateur qui possède le droit d'accès à ladite information déterminée (411, 412, 430, 44),
- des moyens de stockage desdites informations d'adresse dans le répertoire spécifique à l'utilisateur de l'intermédiaire, auquel répertoire ledit au moins un utilisateur a accès (441, 448), et
- des moyens de transmission de ladite information déterminée à l'utilisateur en fonction desdites informations d'adresse (413, 411, 430, 420).

9. Agencement selon la revendication 8, **caractérisé en ce que** ledit agencement comprend également des moyens de chiffrement desdites informations d'adresse par la clé publique de l'utilisateur de sorte que le chiffrement des informations d'adresse peut être décodé par l'utilisateur (411, 412).

10. Agencement selon la revendication 8, **caractérisé en ce que** ledit agencement comprend également des moyens de chiffrement desdites informations de l'utilisateur par la clé publique de l'intermédiaire avant la transmission à l'intermédiaire, des moyens de décodage du chiffrement des informations de l'utilisateur après la transmission à l'intermédiaire et des moyens d'enregistrement des informations d'adresse dans un répertoire intermédiaire spécifique à l'utilisateur en fonction desdites informations de l'utilisateur (411).

11. Agencement selon la revendication 8, **caractérisé en ce que** ledit agencement comprend des moyens de vérification de l'utilisateur afin d'établir une connexion entre l'utilisateur et l'intermédiaire (441, 446).

12. Agencement selon la revendication 11, **caractérisé en ce que** ledit agencement comprend des moyens de création de deux répertoires intermédiaires pour un utilisateur, des moyens d'établissement d'une connexion entre l'utilisateur et le premier répertoire intermédiaire en fonction d'une première vérification de l'utilisateur, et des moyens d'établissement d'une connexion entre l'utilisateur et le deuxième répertoire intermédiaire en fonction d'une deuxième vérification de l'utilisateur, auquel cas la première et la deuxième vérification sont différentes mutuellement en ce qui concerne la fiabilité de la procédure de vérification.
